# FASCICULE DE BREVET EUROPEEN

(11) **EP 1 263 248 B1**
(45) Date de publication et mention de la délivrance du brevet: **09.07.2014**
(21) Numéro de dépôt: 02290959.2
(22) Date de dépôt: 16.04.2002
(51) Int. Cl.: H04W 8/24, H04W 88/02, H04W 12/12

(54) **Procédé d'activation d'une fonction dans un terminal abonné à un réseau**
Verfahren zur Aktivierung einer Funktion in einem Teilnehmerendgerät eines Netzes
Method for activating a function in a terminal subscribed to a network

(30) Priorité: 01.06.2001 FR 0107255; 21.02.2002 FR 0202207
(43) Date de publication de la demande: 04.12.2002
(73) Titulaire: Apple Inc., Cupertino, CA 95014 (US)
(72) Inventeur: Chabanne, Hervé, 78200 Mantes la Jolie (FR)
(74) Mandataire: Lang, Johannes

(56) Documents cités:
- EP-A- 0 796 023
- WO-A-01/17297
- DE-A1- 19 938 201
- US-A- 5 386 468
- US-A- 5 864 757

## Description

La présente invention concerne des perfectionnements apportés au processus d'activation d'une fonction logique dans un terminal abonné à un réseau et notamment, bien que non limitativement, celle concerne des perfectionnements apportés, dans un réseau de communication sans fil, à l'activation d'une fonction logique dans un terminal mobile détenu par un abonné dudit réseau.

Actuellement, un terminal mobile peut être livré à l'abonné avec une ou plusieurs fonctions verrouillée (c'est-à-dire inutilisables) en relation par exemple avec des clauses contractuelles de l'abonnement liant l'abonné à l'opérateur du réseau ; mais ces fonctions initialement verrouillées peuvent devoir être déverrouillés ultérieurement (par exemple clause d'abonnement à action limitée dans le temps, modification de l'abonnement ; etc...).

En particulier, un tel processus apparaît décrit par le document WO 02/17297, dans le but de l'activation d'une caractéristique d'un terminal à partir d'un message de type SMS.

Toutefois, une telle activation intervient sur le seul critère de reconnaissance d'un code inclus dans les premiers caractères du message, ce message étant soit traité comme simple message SMS, soit simplement ignoré, sinon.

Toutefois, il convient que le déverrouillage de la fonction souhaitée ne puisse intervenir que pour un abonné déterminé et qu'avec l'accord de l'opérateur du réseau, et il convient d'empêcher des déverrouillage frauduleux.

C'est le cas en particulier pour le verrouillage dit "simlocking" liant un abonné à un opérateur de réseau donné.

Les opérateurs de réseaux de téléphonie mobile investissent dans l'équipement en terminaux en subventionnant une partie de leur coût. En contrepartie, au début de son utilisation, le terminal mobile est verrouillé ("simlocking") sur le réseau de l'opérateur spécifique, c'est-à-dire qu'il ne peut fonctionner que sur le réseau de l'opérateur qui l'a subventionné pour l'abonnement dans lequel il était inclus. Toutefois, ce verrouillage n'est prévu que pour une durée déterminée (par exemple 6 mois ou 1 an) et à la fin de cette période, l'abonné peut demander à l'opérateur que son terminal mobile soit déverrouillé.

Aujourd'hui le verrouillage de sécurité ("simlocking") est mis en oeuvre dans le terminal mobile et, pour des raisons de coût, il s'agit en général d'un verrouillage essentiellement logique, c'est-à-dire faisant intervenir un logicien ou agissant sur un logiciel, et de façon simplifiée, on peut considérer que le verrouillage du terminal mobile est obtenu par l'introduction, par l'opérateur du réseau, d'une information dérivée d'un code dans le terminal mobile lors de la mise en service de celui-ci.

Le moment venu, le déverrouillage est alors effectué par l'abonné lui-même qui introduit dans son terminal le code qui lui a été communiqué par l'opérateur du réseau, lorsque l'abonné a fait part de son désir de déverrouillage. Le terminal mobile compare le code introduit par l'abonné avec l'information qu'il détient de façon secrète depuis sa mise en service et commande le déverrouillage donnant accès à d'autres réseaux.

Ce processus présente l'inconvénient de laisser à des fraudeurs la possibilité de remonter ("reverse engineering") jusqu'à l'information tenue en mémoire dans le terminal mobile et parfois d'en déduire le code devant être introduit pour provoquer le déverrouillage, ou parfois aussi de remplacer/modifier l'information mémorisée pour la faire correspondre avec un code choisi par le fraudeur. Le terminal mobile se trouve alors déverrouillé sans l'autorisation de l'opérateur du réseau.

Inversement, il peut être souhaité de verrouiller tout ou partie des fonctions d'un terminal mobile jusqu'alors actives, par exemple afin de neutraliser un terminal volé. Par analogie avec ce qui précède, cette neutralisation peut être faite en verrouillant ("simlocking") le terminal volé sur un réseau inexistant.

Plus généralement, dans le domaine informatique, il peut être souhaité d'activer une fonction logique dans un terminal informatique, par exemple pour autoriser ou interdire une connexion à un serveur ou sur un site Internet dans le cadre d'un abonnement.

L'invention a donc pour but de proposer un procédé d'activation d'une fonction logique perfectionné de manière à empêcher une activation frauduleuse de la fonction logique.

A cette fin, l'invention propose un procédé selon la revendication 1 et un terminal selon la revendication 12.

Ainsi, conformément à l'invention, toutes les informations nécessaires à l'activation de la fonction logique ne se trouvent plus présentes dans le terminal mobile dès la mise en service de celui-ci et il ne suffit plus de rentrer le code communiqué par l'opérateur du réseau pour commander l'activation de cette fonction : on accroît la sécurité en prévoyant l'introduction, dans le terminal, des informations - données et/ou programme - nécessaires à l'activation de la fonction uniquement au moment où celle-ci est souhaitée. Cette introduction s'effectue à distance par l'envoi d'un message'spécial approprié au terminal.

Notamment, on peut prévoir que le susdit code soit communiqué au préalable à l'utilisateur du terminal par l'opérateur du réseau et que l'utilisateur l'introduise dans son terminal afin que ce dernier puisse lire le susdit message spécial lorsqu'il le reçoit de l'opérateur.

Mais, on peut aussi prévoir que le code ou une information équivalente soit contenu dans ledit message spécial : l'abonné n'a alors aucune autre démarche à effectuer que de demander à l'opérateur du réseau l'activation de la fonction logique dans son terminal ou bien, dans le cas d'un terminal devant être neutralisé (cas d'un terminal volé par exemple), le message spécial est émis par l'opérateur à sa propre initiative pour neutraliser ledit terminal.

Dans les deux cas, c'est la double introduction, quasi simultanée ou simultanée, de deux types d'informations dans le terminal - d'un côté, le code qui est introduit par l'abonné qui le reçoit de l'opérateur du réseau ou bien qui est contenu dans le message spécial et, de l'autre côté, les informations contenues dans le message spécial envoyé par l'opérateur du réseau directement au terminal - qui valide l'activation de la fonction logique. Cette activation résulte ainsi de la volonté clairement exprimée de l'opérateur du réseau d'activer une fonction dans un terminal donné. Par exemple, dans le cas du verrouillage "simlocking" d'un terminal mobile, l'opérateur envoie dans le message spécial le nouvel état de verrouillage, cet état pouvant être par exemple "terminal déverrouillé" ou, par exemple encore, "terminal verrouillé sur un réseau inexistant" pour neutraliser un terminal volé.

D'une façon intéressante, les informations utiles à l'activation de la fonction logique peuvent comprendre des données et/ou, de façon encore plus sécuritaire, au moins un programme d'activation de ladite fonction. On est ainsi assuré que, quelles que soient les tentatives faites par un fraudeur avant que ces informations soient transmises au terminal par le message spécial, la fonction logique ne pourra pas être activée puisque les éléments logiciels nécessaires à cette activation ne sont pas présents dans le terminal.

Pour éviter qu'un message spécial destiné à un terminal donné soit intercepté par un fraudeur et réutilisé avec succès ultérieurement et/ou sur un autre terminal, on prévoit que le message spécial soit individualisé en outre en relation avec le terminal auquel il est spécifiquement destiné et sous au moins une donnée contenue dans le terminal et connue de l'opérateur du réseau.

De façon préférée dans ce cas, le message spécial est signé sous une clé privée de l'opérateur du réseau de manière à pouvoir être vérifié, une fois reçu par le terminal, sous une clé publique de l'opérateur du réseau qui est tenue en mémoire dans ledit terminal, l'activation de ladite fonction logique étant tributaire de la réussite de ladite vérification. On peut également envisager avantageusement que ladite fonction logique n'est activée que lorsque le terminal a vérifié que le message spécial était bien individualisé à son égard.

De façon également préférée, la donnée sous laquelle le message spécial est individualisé entre en compte dans le calcul de la signature. En particulier, lorsque le code est le seul élément d'individualisation et qu'il est communiqué par ailleurs à l'abonné, la signature porte à la fois sur le code et le message spécial.

Toutefois, il est souhaitable, pour améliorer la sécurité, que la donnée sous laquelle le message spécial est individualisé et chiffré comprenne d'autres informations, et en particulier des informations caractéristiques du terminal et/ou tenues en mémoire dans celui-ci. Ainsi, le message spécial pourra en outre être individualisé par un des éléments suivants :
- un identifiant unique public et/ou
- un identifiant unique privé logiciel, c'est-à-dire connu seulement de l'opérateur du réseau (par exemple un numéro de série mis par le fabricant, qui n'est jamais communiqué à l'extérieur du terminal hormis vers l'opérateur), et/ou
- un identifiant unique privé matériel (par exemple peut être mis en oeuvre en plaçant dans le terminal un composant spécial prévu à cet effet).

Tous ces identifiants sont en pratique tenus en mémoire dans le terminal.

Dans un mode de mise en oeuvre préféré du procédé de l'invention, les messages spéciaux utiles à l'activation de la fonction logique sont envoyés chiffrés sous les identifiants précités et le code.

Enfin, toujours dans un mode de mise en oeuvre préféré du procédé de l'invention, l'activation de la fonction logique n'est réalisable que pendant un laps de temps prédéterminé, déclenché par exemple par la première occurrence de l'introduction du code dans le terminal par l'abonné et par la réception par le terminal du message spécial, le terminal étant de construction prévue à cet effet et calculant lui-même la fenêtre temporelle de validation de l'activation de la fonction logique.

Finalement, le processus d'activation de la fonction logique peut, conformément à l'invention, se dérouler comme suit en pratique. Les messages spéciaux utiles à l'activation de la fonction souhaitée sont envoyés, par l'opérateur du réseau à destination du terminal, chiffrés sous les susdits identifiants et le code. Après réception de ce message par le terminal, et éventuellement après l'introduction du code par l'abonné à l'aide du clavier du terminal, le terminal déchiffre le message spécial en mémoire volatile RAM et l'efface de sa mémoire non volatile (il en résulte que, si le terminal est recalé à zéro, l'effet du message spécial sera perdu). Le terminal disposant alors des données et/ou du programme nécessaire, l'exécution du programme d'activation de la fonction s'engage si le terminal a réussi la vérification de la signature grâce à la clé publique de l'opérateur qui est contenue dans sa mémoire.

Comme on l'a indiqué plus haut, une application tout particulièrement intéressante des dispositions de l'invention concerne le domaine de la téléphonie mobile et notamment le déverrouillage du terminal mobile préalablement verrouillé ("simlocking") comme exposé précédemment dans le préambule.

Dans ce contexte, pour, dans un réseau de communication sans fil, désactiver une fonction de verrouillage de type logique dans un terminal mobile détenu par un abonné dudit réseau, on peut procéder comme il suit :
- l'opérateur du réseau communique à l'abonné un code pour que celui-ci l'introduise dans son terminal mobile
   et dans le même temps
- l'opérateur du réseau émet, à destination du terminal mobile, au moins un message spécial, tel qu'un message SMS, contenant les informations utiles à la désactivation de la fonction de verrouillage dudit terminal mobile, le message spécial, notamment SMS, étant individualisé.

Mais dans un autre mode opératoire, on peut prévoir que l'opérateur du réseau émet, uniquement à destination du terminal mobile, au moins un message spécial, tel qu'un message SMS, contenant les informations utiles à la désactivation de la fonction de verrouillage dudit terminal mobile, le message SMS étant individualisé pour ledit terminal mobile.

En effet, pour éviter qu'un message SMS destiné à un terminal mobile donné soit intercepté par un fraudeur et réutilisé avec succès ultérieurement et/ou sur un autre terminal, on prévoit que le message SMS soit individualisé en outre en relation avec le terminal mobile auquel il est spécifiquement destiné et sous au moins une donnée contenue dans le terminal.

De façon préférée, on peut faire en sorte que le message SMS inclut la signature sous une clé privée de l'opérateur du réseau téléphonique, tandis qu'une clé publique de l'opérateur est tenue en mémoire dans le terminal mobile de manière que le message SMS puisse être vérifié une fois reçu.

Grâce à un tel message signé, il devient aisé, pour l'opérateur, de rendre non fonctionnel un terminal mobile qui doit être éliminé du réseau (par exemple terminal volé).

Le message SMS pourra être individualisé avec :
- un identifiant unique public IMEI (International Mobile Equipment Identity ; norme ETSI GSM 02.16), et/ou
- un identifiant unique privé logiciel (c'est-à-dire connu seulement de l'opérateur du réseau) IDSOFT (par exemple un numéro de série mis par le fabricant, qui n'est jamais communiqué à l'extérieur du terminal mobile hormis vers l'opérateur), et/ou
- un identifiant unique privé matériel IDHARD (par exemple peut être mis en oeuvre en plaçant dans le terminal mobile un composant spécial tel que le composant DS 2401 Silicon Serial Number chip fabriqué par DALLAS Semi-Conductor).

Tous ces identifiants sont en pratique tenus en mémoire dans le terminal mobile.

Dans un mode de mise en oeuvre préféré du procédé de l'invention, les messages spéciaux SMS utiles à la désactivation de la fonction de verrouillage sont envoyés chiffrés sous IMEI, IDSOFT, IDHARD et CODE.

Enfin, toujours dans un mode de mise en oeuvre préféré du procédé de l'invention, la désactivation de la fonction de verrouillage n'est réalisable que pendant un laps de temps prédéterminé, déclenché par exemple par la première occurrence de l'introduction du code dans le terminal mobile par l'abonné et par la réception par le terminal mobile du message spécial SMS, le terminal mobile étant de construction prévue à cet effet et calculant lui-même la fenêtre temporelle de validation de la désactivation de la fonction de verrouillage .

Finalement, le processus de désactivation de la fonction de verrouillage peut, conformément à l'invention, se dérouler comme suit en pratique. Les messages spéciaux SMS utiles à la désactivation recherchée sont envoyés, par l'opérateur du réseau à destination du terminal mobile, chiffrés sous IMEI, IDSOFT, IDHARD et CODE. Après réception de ces messages SMS par le terminal mobile et après l'introduction du code CODE par l'abonné à l'aide du clavier du terminal mobile, celui-ci déchiffre les messages SMS en mémoire volatile RAM et les efface de sa mémoire non volatile (il en résulte que, si le terminal mobile est recalé à zéro, l'effet des messages SMS sera perdu). Le terminal disposant alors des données et/ou du programme nécessaire, l'exécution du programme de désactivation de la fonction de verrouillage s'engage si le terminal mobile a réussi la vérification de la signature grâce à la clé publique de l'opérateur contenue dans sa mémoire.

Comme cela a été précisé plus haut, les moyens de l'invention propres à commander une désactivation sécurisée du verrouillage d'une fonction du terminal mobile ont une application qui n'est pas limitée à la désactivation du "simlocking", mais peuvent trouver application en relation avec d'autres fonctions optionnelles prévues de construction, mais non initialement mises en service (par exemple fonction mains libres ; fonction de renvoi sur un autre terminal ; fonction d'affichage d'un numéro appelant ; ...).

Au surplus, les dispositions de l'invention ne se limitent pas à l'envoi, par l'opérateur vers le terminal mobile, de seuls messages SMS qui sont mis en oeuvre actuellement dans le réseau GSM ; elles pourront tout aussi bien être exploitées avec toutes sortes de messages pouvant être transmis dans le réseau WAP, ou encore d'autres réseaux futurs.

Enfin, on soulignera que, dans les explications qui précèdent, l'opérateur du réseau peut, dans certains cas, déléguer sa signature à une autorité compétente.

## Revendications

1. Procédé pour activer une fonction logique dans un terminal abonné à un réseau, dans lequel l'opérateur du réseau émet, à destination du terminal, au moins un message spécial contenant les informations utiles à l'activation de la fonction logique dans le terminal, de telle sorte que toutes les informations nécessaires à l'activation de la fonction logique ne se trouvent pas présentes dans le terminal dès sa mise en service,
**caractérisé en ce que**
le message spécial est individualisé et chiffré pour le terminal, le message spécial étant en outre individualisé par un des éléments suivants :
• un identifiant unique public, et/ou
• un identifiant unique privé logiciel connu uniquement de l'opérateur du réseau, et/ou
• un identifiant unique privé matériel,
tous tenus en mémoire dans le terminal.

2. Procédé selon la revendication 1, **caractérisé en ce que** ladite fonction logique n'est activée que lorsque le terminal a vérifié que le message spécial était bien individualisé à son égard.

3. Procédé selon la revendication 1 ou 2, **caractérisé en ce que** le message spécial est signé sous une clé privée de l'opérateur du réseau de manière à pouvoir être vérifié, une fois reçu par le terminal, sous une clé publique de l'opérateur du réseau qui est tenue en mémoire dans ledit terminal, l'activation de ladite fonction logique étant tributaire de la réussite de ladite vérification.

4. Procédé selon l'une quelconque des revendications 1 à 3, **caractérisé en ce qu'**en parallèle à la transmission du message spécial au terminal, un code est remis à l'utilisateur dudit terminal et **en ce que** l'utilisateur introduit ce code dans le terminal.

5. Procédé selon la revendication 4, **caractérisé en ce que** la signature sous une clé privée de l'opérateur du réseau est appliquée au susdit message spécial et au code.

6. Procédé selon la revendication 4 ou 5, **caractérisé en ce que** le message spécial est en outre chiffré par ledit code.

7. Procédé selon l'une quelconque des revendications 4 à 6, **caractérisé en ce que** l'activation de la fonction logique est rendue possible par le terminal seulement pendant un laps de temps prédéterminé à compter de l'introduction du code par l'abonné ou de la réception du message spécial émis par l'opérateur du réseau.

8. Procédé selon l'une quelconque des revendications 1 à 7, **caractérisé en ce que**, après réception du message spécial émis par l'opérateur du réseau, le terminal déchiffre le message spécial en mémoire volatile RAM et l'efface de sa mémoire non volatile, ensuite de quoi le programme d'activation de la fonction logique s'exécute.

9. Procédé selon l'une quelconque des revendications 1 à 8, **caractérisé en ce que** le terminal est un terminal téléphonique mobile et l'opérateur du réseau est un opérateur de téléphonie mobile.

10. Procédé selon l'une quelconque des revendications 1 à 9, **caractérisé en ce que** le message spécial comprend l'état d'un verrouillage dans le terminal.

11. Procédé selon la revendication 10, **caractérisé en ce que** l'état de verrouillage dans le terminal est propre à bloquer ledit terminal.

12. Terminal agencé pour qu'une fonction logique soit activée dans ledit terminal selon le procédé de l'une quelconque des revendications 1 à 11.

## Patentansprüche

1. Verfahren zum Aktivieren einer logischen Funktion in einem Teilnehmergerät, das auf ein Netzwerk abonniert ist, bei welchem der Netzwerkbetreiber in Richtung des Teilnehmergeräts mindestens eine spezielle Nachricht sendet, die die zur Aktivierung der logischen Funktion im Teilnehmergerät nützlichen Informationen enthält, so dass die zur Aktivierung der logischen Funktion notwendigen Informationen sich nicht alle im Teilnehmergerät bei seiner Inbetriebnahme befinden,
**dadurch gekennzeichnet, dass**
die spezielle Nachricht für das Teilnehmergerät individualisiert und chiffriert wird, wobei die spezielle Nachricht weiterhin mittels eines der folgenden Elemente individualisiert wird:
• eine einzige öffentliche Kennung, und/oder
• eine einzige private Software-Kennung, die lediglich vom Netzwerkbetreiber bekannt ist, und/oder
• eine einzige private Hardware-Kennung,
wobei alle im Speicher des Teilnehmergeräts gespeichert sind.

2. Verfahren nach Anspruch 1, **dadurch gekennzeichnet, dass** die logische Funktion erst aktiviert wird, wenn das Teilnehmergerät überprüft hat, dass die spezielle Nachricht tatsächlich für sich individualisiert wurde.

3. Verfahren nach Anspruch 1 oder 2, **dadurch gekennzeichnet, dass** die spezielle Nachricht unter Verwendung eines privaten Schlüssels des Netzwerkbetreibers signiert wird, so dass sie nach Empfang durch das Teilnehmergerät unter Verwendung eines öffentlichen Schlüssels des Netzwerkbetreibers, der im Speicher des Teilnehmergeräts gespeichert wird, überprüft werden kann, wobei die Aktivierung der logischen Funktion abhängig vom Erfolg dieser Überprüfung ist.

4. Verfahren nach irgendeinem der Ansprüche 1 bis 3, **dadurch gekennzeichnet, dass**, parallel zur Übertragung der speziellen Nachricht an das Teilnehmergerät, ein Code an den Benutzer des Teilnehmergeräts übermittelt wird, und dadurch, dass der Benutzer diesen Code in das Teilnehmergerät eingibt.

5. Verfahren nach Anspruch 4, **dadurch gekennzeichnet, dass** die Signatur unter Verwendung eines privaten Schlüssels des Netzwerkbetreibers auf die spezielle Nachricht und den Code angewandt wird.

6. Verfahren nach Anspruch 4 oder 5, **dadurch gekennzeichnet, dass** die spezielle Nachricht weiterhin durch den Code chiffriert wird.

7. Verfahren nach irgendeinem der Ansprüche 4 bis 6, **dadurch gekennzeichnet, dass** die Aktivierung der logischen Funktion durch das Teilnehmergerät lediglich während einer vorbestimmten Zeitdauer ab der Eingabe des Codes durch den Abonnenten oder dem Empfang der durch den Netzwerkbetreiber gesendeten speziellen Nachricht ermöglicht wird.

8. Verfahren nach irgendeinem der Ansprüche 1 bis 7, **dadurch gekennzeichnet, dass** das Teilnehmergerät nach Empfang der durch den Netzwerkbetreiber gesendeten speziellen Nachricht im flüchtigen Speicher RAM die spezielle Nachricht dechiffriert und sie von seinem nichtflüchtigen Speicher löscht, wonach das Programm zur Aktivierung der logischen Funktion durchgeführt wird.

9. Verfahren nach irgendeinem der Ansprüche 1 bis 8, **dadurch gekennzeichnet, dass** das Teilnehmergerät ein tragbares Mobilfunkteilnehmergerät ist und der Netzwerkbetreiber ein Mobilfunkbetreiber ist.

10. Verfahren nach irgendeinem der Ansprüche 1 bis 9, **dadurch gekennzeichnet, dass** die spezielle Nachricht den Zustand einer Sperre im Teilnehmergerät umfasst.

11. Verfahren nach Anspruch 10, **dadurch gekennzeichnet, dass** der Zustand der Sperre im Teilnehmergerät dazu geeignet ist, das Teilnehmergerät zu blockieren.

12. Endgerät, das zur Aktivierung einer logischen Funktion im Teilnehmergerät nach dem Verfahren nach irgendeinem der Ansprüche 1 bis 11 eingerichtet ist.

## Claims

1. Method for activating a logical function in a terminal subscribed to a network, wherein the network operator transmits to the terminal at least one special message including the information useful for activating the logical function in the terminal, so that all the information necessary for activating the logical function is not present in the mobile terminal upon its service start,
**characterized in that**
the special message is individualized and ciphered for the terminal, the special message being further individualized by one of the following elements:
• a unique public identifier, and/or
• a unique private software identifier known only to the network operator, and/or
• a unique private hardware identifier,
wherein all of them are held in a memory of the terminal.

2. Method according to claim 1, **characterized in that** said logical function is only activated when the terminal has checked that the special message was individualized for it.

3. Method according to claim 1 or 2, **characterized in that** the special message is signed using a private key of the network operator, so that it can be checked, once received by the terminal, using a public key of the network operator which is held in a memory of said terminal, wherein the activation of said logical function is subject to said checking being successful.

4. Method according to any one of claims 1 to 3, **characterized in that**, parallel to the transmission of the special message to the terminal, a code is delivered to the user of said terminal and **in that** the user inputs this code into the terminal.

5. Method according to claim 4, **characterized in that** the signature using a private key of the network operator is applied to said special message and to the code.

6. Method according to claim 4 or 5, **characterized in that** the special message is further ciphered by said code.

7. Method according to any one of claims 4 to 6, **characterized in that** the activation of the logical function is rendered possible by the terminal only during a predetermined time duration starting from the code input by the subscriber or the reception of the special message transmitted by the network operator.

8. Method according to any one of claims 1 to 7, **characterized in that**, after receiving the special message transmitted by the network operator, the terminal deciphers the special message in RAM volatile memory and erases it from its non-volatile memory, following which the program for activating the logical function is executed.

9. Method according to any one of claims 1 to 8, **characterized in that** the terminal is a mobile telephone terminal and the network operator is a mobile telephone operator.

10. Method according to any one of claims 1 to 9, **characterized in that** the special message comprises the state of a locking in the terminal.

11. Method according to claim 10, **characterized in that** the state of locking in the terminal is capable of blocking said terminal.

12. Terminal adapted so that a logical function is activated in said terminal according to the method of any one of claims 1 to 11.
